# EUROPEAN PATENT APPLICATION

(11) **EP 2 574 872 A2**
(43) Date of publication of application: **03.04.2013**
(21) Application number: 12185986.2
(22) Date of filing: 25.09.2012
(51) Int. Cl.: F25J 3/06, B01D 53/62

(54) **Low Temperature Heat Exchanger System and Method**

(30) Priority: 30.09.2011 US 201113250804
(71) Applicant: General Electric Company, Schenectady, NY 12345 (US)
(72) Inventor: Lissianski, Vitali Victor, Niskayuna, NY New York 12309 (US); Shisler, Roger Allen, Niskayuna, NY New York 12309 (US); Gonzalez, Miguel Angel, Niskayuna, NY New York 12309 (US)
(74) Representative: Cleary, Fidelma

(57) **Abstract**

A device for capturing carbon dioxide includes a supply source (100) for supplying a compressed flue gas; a multi-stream heat exchanger (102) for pre-cooling the compressed flue gas and a gas expansion device (114) located downstream of the multi-stream heat exchanger. The multi-stream heat exchanger is configured to separate the compressed flue gas into a first compressed stream (130) and a second compressed stream (132). The gas expansion device is configured to expand the compressed flue gas into a first sub-stream (136) of carbon dioxide depleted gas and a second sub-stream (134) of carbon dioxide. The device includes a first recirculation channel (138) that recirculates a portion of the first sub-stream into the multi-stream heat exchanger and a second recirculation channel (152) that recirculates at least a portion of the second sub-stream into the multi-stream heat exchanger, wherein the multi-stream heat exchanger is configured to pre-cool the compressed flue gas using the first sub-stream and the second sub-stream.

## Description

### BACKGROUND OF THE INVENTION

The field of the present disclosure relates generally to low temperature capture of carbon dioxide (CO₂) from a carbon dioxide containing gas. More particularly, the present disclosure relates to systems and methods for separating carbon dioxide from a gas stream and utilizing the carbon dioxide to pre-cool flue gas.

Combustion of fuels for energy production generates large quantities of exhaust gas, for example, exhaust gas produced at fossil fuel burning power plants. The exhaust gas is commonly referred to as flue gas because the exhaust gas exits the combustion chamber via a flue and is typically exhausted to the atmosphere. The composition of the flue gas is dependent upon the fuel being combusted. Typical flue gas comprises nitrogen, carbon dioxide, water vapor, oxygen, carbon monoxide, oxides and particulate matter.

Carbon dioxide gas has been found to be a greenhouse gas, which may contribute to global warming. Carbon dioxide gas is also an ingredient used in the food and beverage industry, and contributes to the growth of plants through photosynthesis. Typically, carbon dioxide may be removed from flue gas using amines. Alternatively, low temperature capture of carbon dioxide, wherein flue gas is cooled to low temperature temperatures until solid CO₂ is formed, is an alternative method to currently existing technologies that utilize amine-based solvents. However, the direct heat exchange between the cold streams and the flue gas results in large temperature differences between the two streams and is not energy efficient. Further, solid CO₂ forms on the surfaces of tubes containing the cooling stream, thus reducing efficiency of heat transfer between the cold tubes and the flue gas. In addition, removal of solid CO₂ from the surfaces of the tubes presents technical challenges.

The present disclosure describes systems and methods that enable effective heat transfer between a cold stream of a heat exchanger and a warm stream of flue gas in a low temperature carbon dioxide removal processes.

### BRIEF DESCRIPTION OF THE INVENTION

In one aspect, a device for capturing carbon dioxide comprises a supply source for supplying a compressed flue gas; a multi-stream heat exchanger for pre-cooling the compressed flue gas; a gas expansion device located downstream of the multi-stream heat exchanger, the gas expansion device expanding the compressed flue gas into a first sub-stream of carbon dioxide depleted gas and a second sub-stream of carbon dioxide, a first recirculation channel that recirculates at least a portion of the first sub-stream into the multi-stream heat exchanger, and a second recirculation channel that recirculates at least a portion of the second sub-stream into the multi-stream heat exchanger. The multi-stream heat exchanger is configured to pre-cool the compressed flue gas using the first sub-stream and the second sub-stream.

In another aspect, a method of capturing carbon dioxide comprises providing a compressed gas containing carbon dioxide; pre-cooling the compressed gas in a multi-stream heat exchanger; expanding the compressed gas in a gas expansion device to provide a first sub-stream of carbon dioxide depleted gas and a second sub-stream of carbon dioxide, and supplying the first sub-stream and the second sub-stream to the multi-stream heat exchanger to facilitate the pre-cooling of the compressed gas.

In yet another aspect, a carbon capturing system comprises a supply for supplying a compressed flue gas; a water pre-cooler that cools the compressed flue gas; a multi-stream heat exchanger, located downstream of the water-pre-cooler, for further pre-cooling the compressed flue gas; a gas expansion device located downstream of the multi-stream heat exchanger, the gas expansion device expanding the compressed flue gas into a first sub-stream of carbon dioxide depleted gas and a second sub-stream of carbon dioxide, a first recirculation channel that recirculates at least a portion of the first sub-stream into the multi-stream heat exchanger, and a second recirculation channel that recirculates at least a portion of the second sub-stream into the multi-stream heat exchanger. The multi-stream heat exchanger is configured to pre-cool the compressed flue gas using the first sub-stream and the second sub-stream.

### BRIEF DESCRIPTION OF THE DRAWINGS

Embodiments of the present invention will now be described, by way of example only, with reference to the accompanying drawings in which:
Fig. 1 is a block diagram of an exemplary low temperature carbon capturing system according to the present disclosure.

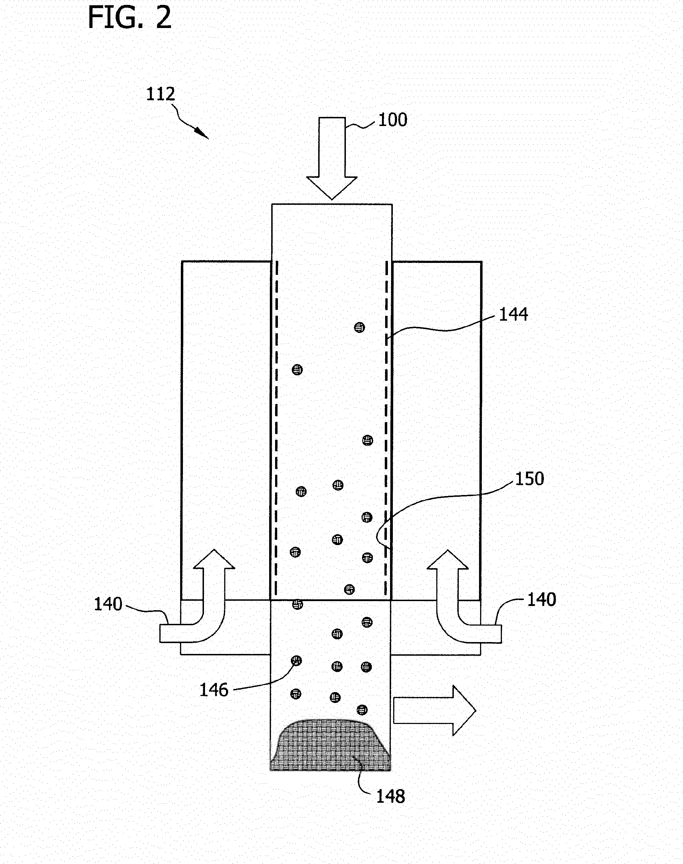

Fig. 2 is a cross section of an exemplary heat exchanger according to the present disclosure.
Fig. 3 is a chart showing an exemplary plot of flue gas temperature and cold stream temperature in a heat exchanger according to the present disclosure.
Fig. 4 is a chart showing an exemplary plot of energy and heat exchanger sections according to the present disclosure.
Fig. 5 is a chart plotting net efficiency points and exhaust gas recirculation values.

### DETAILED DESCRIPTION OF THE INVENTION

The present disclosure describes systems and methods that provide the technical effect of facilitating effective heat transfer between a cold stream of a heat exchanger and a warm stream of flue gas in a low temperature carbon dioxide removal process.

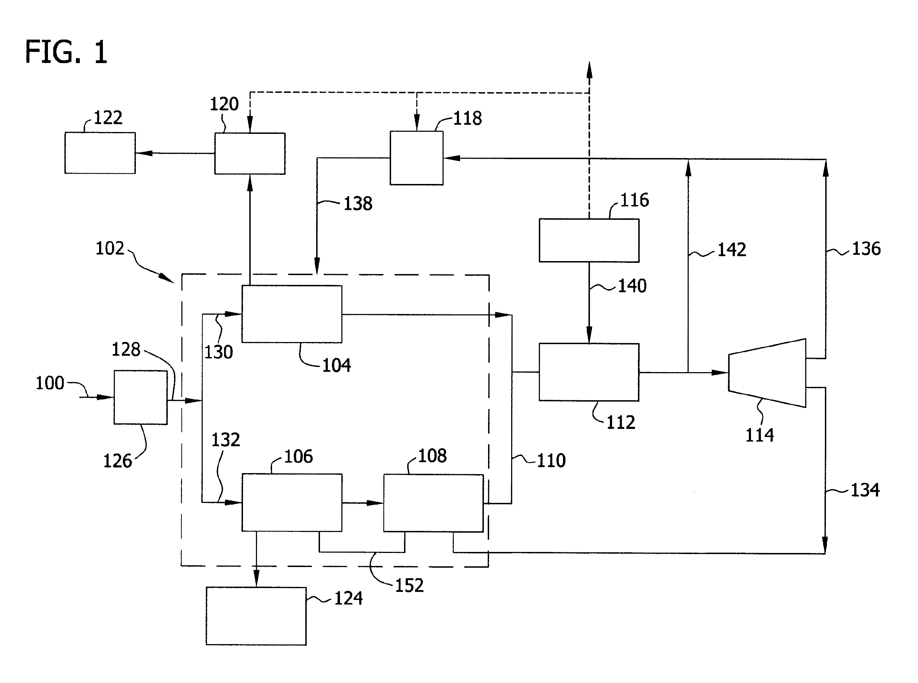

Shown generally in Fig. 1 is an exemplary embodiment of a cryogenic carbon capturing system according to the present disclosure. In one embodiment, the carbon capturing system includes a compressed stream of carbon dioxide containing gas 100 (e.g., a flue gas), a multi-stream heat exchanger 102 comprising heat exchangers 104, 106 and 108, a manifold 110, a secondary heat exchanger 112, an expansion device 114, a refrigeration device 116, a pair of solid to liquid phase change devices 118, 120, storage chambers 122, 124 and a water pre-cooler 126.

In one embodiment, compressed stream of carbon dioxide gas 100 is a flue gas extracted from a flue of a fossil fuel fired power plant, such as an electrical power plant. The pressure and temperature of compressed stream of carbon dioxide gas 100 are dependent upon the contents of the gas, and the compressor used for compression. In one embodiment, the compressor is controlled by an operator to provide a temperature and pressure selected by the user. Alternatively, the compressor may automatically adjust and provide the compressed stream of carbon dioxide gas 100 at a predetermined pressure and temperature. For example, in one embodiment, compressed stream of carbon dioxide gas 100 is provided at a temperature of approximately 25°C and a pressure of 4.8 bar. In another embodiment, the contents of compressed stream of carbon dioxide gas 100 are, by mole fraction, 0.668 nitrogen, 0.167 water vapor, 0.133 carbon dioxide, 0.024 oxygen and 0.008 argon, with the flow rate of the compressed stream of carbon dioxide gas 100 being approximately 5,811,370 lbm/hr.

In one embodiment, compressed stream of carbon dioxide containing gas 100 enters multi-stream heat exchanger 102 via an input 128. In one embodiment, multi-stream heat exchanger 102 comprises a gas to liquid heat exchanger 104, a gas to gas heat exchanger 106 and a gas to solid heat exchanger 108. In other embodiments, heat exchangers 104, 106 and 108 are any suitable heat exchanger that allows the system to function as described herein.

In one embodiment, compressed stream of carbon dioxide gas 100 is separated into two streams 130, 132 before entering multi-stream heat exchanger 102. Alternatively, multi-stream heat exchanger 102 is configured to separate compressed stream of carbon dioxide gas 100 into two streams after entering multi-stream heat exchanger 102. In one embodiment, streams 130 and 132 are not equal in flow rate, for example, stream 132 is approximately 60% to 90% and stream 130 is approximately 10% to 40% of the total flow of compressed stream of carbon dioxide gas 100. In another embodiment, stream 132 is approximately 75% to 90% and stream 130 is approximately 10% to 25% of the total flow of compressed stream of carbon dioxide gas 100. In yet another embodiment, stream 132 is approximately 80% and stream 130 is approximately 20% of the total flow of compressed stream of carbon dioxide gas 100. However, the percentage flow rate of streams 130 and 132 may be any percentages that allow the system to function as described herein.

Multi-stream heat exchanger 102 is configured to pre-cool compressed stream of carbon dioxide gas 100. In one embodiment, in order to pre-cool compressed stream of carbon dioxide gas 100, multi-stream heat exchanger 102 utilizes a stream of carbon dioxide depleted material 134 and a stream of carbon dioxide 136. Streams 134 and 136 may be in solid, liquid or gas form. In one embodiment, stream 134 is a stream of carbon dioxide depleted gas and stream 136 is a stream of solid carbon dioxide.

Stream of carbon dioxide depleted material 134 and stream of carbon dioxide 136 are provided from an expansion device 114 located downstream of multi-stream heat exchanger 102. Compressed stream of carbon dioxide containing gas 100 flows into expansion device 114. Expansion device 114 expands compressed stream of carbon dioxide containing gas 100, which cools compressed stream of carbon dioxide containing gas 100. Expansion device 114 cools, by expansion, carbon dioxide containing gas 100 to an extent that separates carbon dioxide from other components of carbon dioxide containing gas 100. In one embodiment, expansion device 114 outputs, after expansion, carbon dioxide stream 136 at -119°C and carbon dioxide depleted stream 134 at -119°C.

In one embodiment, carbon dioxide stream 136 is fed to heat exchanger 104 via a solid to liquid phase change device 118. The solid to liquid phase change device 118 warms the incoming stream of solid carbon dioxide 136 until stream 136 becomes a liquid stream of carbon dioxide 138. In another embodiment, the temperature of liquid carbon dioxide stream 138 is approximately -56 °C. Liquid carbon dioxide stream 138 is fed into heat exchanger 104, and cools stream 130. In one embodiment, the temperature of stream 130 at the output of heat exchanger 104 is -51°C and the temperature of the liquid carbon dioxide stream 138 output from gas to liquid heat exchanger 104 is -22°C.

As shown in Fig. 1, heat exchanger 104 outputs carbon dioxide stream 138 to a warming device 120. Alternatively, warming device 120 warms carbon dioxide stream 138 from approximately -22 °C to 20 °C. As a further embodiment, warming device 120 outputs carbon dioxide stream 138 to a storage chamber 122 for storage or sequestration.

In one embodiment, a secondary heat exchanger 112 is disposed between multi-stream heat exchanger 102 and expansion device 114. In another embodiment, secondary heat exchanger 112 is supplied a refrigerant 140 from refrigerator device 116. Secondary heat exchanger 112 is configured to further pre-cool compressed carbon dioxide containing gas stream 100 before stream 100 enters expansion device 114. In one embodiment, secondary heat exchanger 112 outputs a stream of carbon dioxide 142 that is combined with carbon dioxide stream 136. In another embodiment, carbon dioxide stream 142 is solid carbon dioxide at -97 °C. Additionally, secondary heat exchanger 112 outputs a pre-cooled stream of carbon dioxide containing gas 100 to expansion device 114. In one embodiment, pre-cooled stream of compressed carbon dioxide containing gas 100 supplied to expansion device 114 from secondary heat exchanger 112 is at the same temperature as stream 140. Alternatively, pre-cooled stream of compressed carbon dioxide containing gas 100 is at a different temperature than stream 140. In another embodiment, when stream 142 is combined with stream 136, the resulting temperature of the combined carbon dioxide streams is -102°C.

Secondary heat exchanger 112 comprises a ice-phobic coating 144 to prevent, or substantially prevent, solid carbon dioxide 146 from sticking to the coated surface. In one embodiment, secondary heat exchanger 112 comprises a collection portion 148 for collecting solid carbon dioxide particles 146. In another embodiment, solid carbon dioxide particles 148 are collected and stored. In yet another embodiment, solid carbon dioxide particles 148 are output as carbon dioxide stream 142. In yet another embodiment, secondary heat exchanger 112 comprises a vibrating device 150 that vibrates heat exchanger 112 to prevent or substantially prevent solid carbon dioxide 146 from sticking to coated surface 144.

In one embodiment, carbon dioxide depleted gas stream 134 is supplied back to heat exchanger 108. In another embodiment, carbon dioxide depleted stream 134 is supplied to heat exchanger 108 at a temperature of -119 °C and cools gas stream 132 from an input temperature of approximately -83 °C to approximately -87 °C, and carbon dioxide depleted stream 152 exits heat exchanger 108 at approximately -88 °C. In yet another embodiment, carbon dioxide depleted stream 152 is supplied to heat exchanger 106 to cool compressed gas stream 132. In still another embodiment, heat exchanger 106 cools stream 132 from a temperature of approximately 25 °C to approximately -83 °C and exhausts the carbon dioxide depleted gas to storage chamber 124.

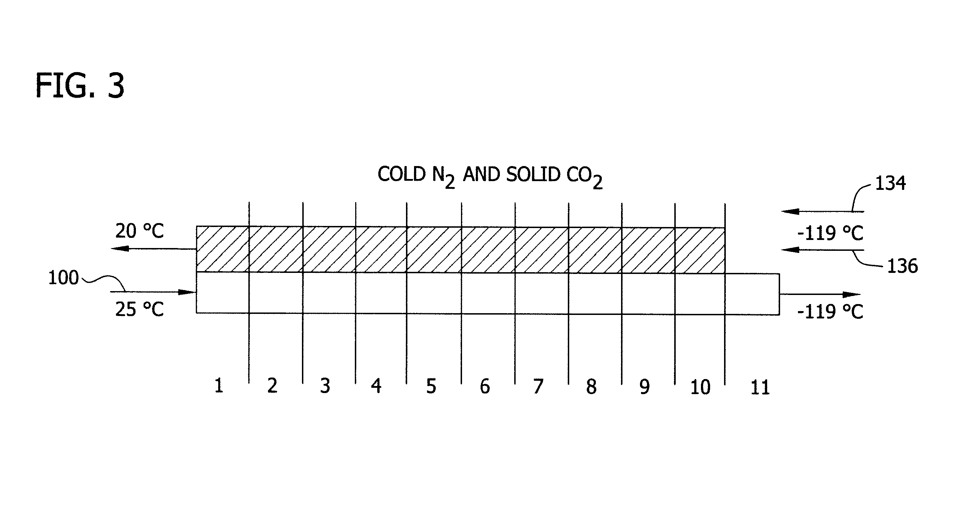

In one embodiment, a temperature difference between the cooling medium and the compressed gas stream in one or more heat exchangers 104, 106, 108 and 112 is 5 °C or less. In one embodiment, the 5 °C temperature differential is facilitated by one or more of heat exchangers 104, 106, 108 and 112 being counter-flow heat exchangers. For example, as shown in Fig. 3, the system has been segmented into 11 exemplary segments 1-11. Each segment represents a different point along a path of the system. In this manner, when carbon dioxide containing gas stream 100 interfaces with a cold stream in each of heat exchangers 104, 106, 108 and 112, the counterflow arrangement of heat exchangers 104, 106, 108 and 112 provides a temperature differential (i.e., a pinch point) of the cold stream (e.g., cold streams 134, 136, 138, 140) and the warm stream (e.g., carbon dioxide containing gas stream 100) within the heat exchangers to be approximately 5°C. The 5°C temperature differential facilitates a controlled and efficient manner of low temperature capture of carbon dioxide from a carbon dioxide containing gas.

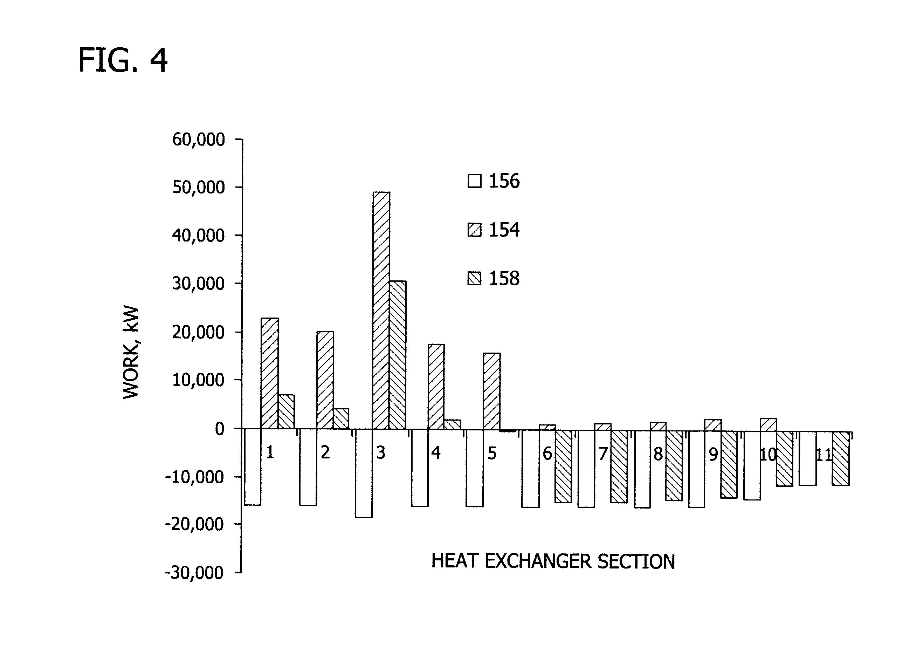

Shown in Fig. 4 is an exemplary plot of the energy balance in each of segments 1-11 of Fig. 3. Each of the bars in Fig. 4 represents an amount of energy that is required to be added 154 or removed 156 from a stream to maintain the 5 °C temperature difference between the respective cooling stream and the warm stream within a heat exchanger. Negative energy values correspond to energy that has to be removed from a specific stream. For example, since the compressed carbon dioxide containing gas stream 100 is cooled in each heat exchanger, the energy balance for stream 100 is always negative. In one embodiment, in zones 1-4, energy has to be added 158 to the cooling stream in an amount larger than the amount to be removed from stream 100. In zones 5-10 more energy has to be removed from stream 100 than needs to be added to the cooling stream. In one embodiment, zones 5-10 represent a path through heat exchanger 112, wherein refrigeration system 116 is employed to provide refrigerant 140 to secondary heat exchanger 112 to remove energy from stream 100 in zones 5-10. In another embodiment, refrigeration system 116 is used to remove heat from stream 100 in zone 11. In another embodiment, heat removed from refrigerant 140 in refrigeration system 116 in zones 5-11 is transferred to warming device 120 and liquid to gas phase change device 118 in zones 1-4. Zones 1-11 are exemplary, and may be distributed along the system in a manner that allows the system to function as described herein.

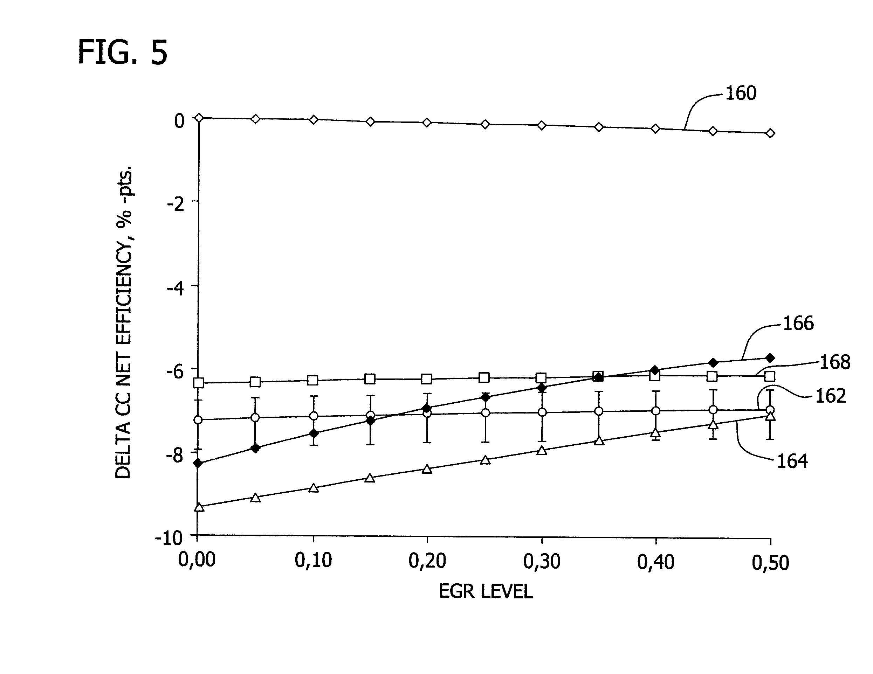

Shown in Fig. 5 is an exemplary plot of net efficiency points and exhaust gas recirculation levels of different combined cycle systems, which may include a carbon capture system. The exhaust gas recirculation (EGR) level is an operator controlled parameter of a combined cycle system, such as a natural gas combined cycle system. Typically, a combined cycle system runs at approximately 50% efficiency (i.e., 50 net efficiency points). However, when a carbon capture system is added to a combined cycle system, a reduction in efficiency occurs, which decreases the net efficiency points of a system. Line 160 plots the net efficiency points of a natural gas combined cycle system without a carbon capture system, and represents a baseline combined cycle system, such as a power plant. Line 162 plots the net efficiency points of a natural gas combined cycle system including an amine-based carbon capture system. As shown, a loss of approximately 7 efficiency points (i.e., an efficiency penalty) is incurred at all EGR levels when utilizing an amine-based carbon capture system. Line 164 plots the net efficiency points of a natural gas combined cycle system including a known low temperature carbon capture system not including a multi-stream heat exchanger according to the present disclosure. As shown in Fig. 5, an efficiency penalty ranging between -9 to -7 points is incurred with a traditional low temperature carbon capture system. Line 166 plots the net efficiency points of a natural gas combined cycle system including a low temperature carbon capture system according to the present disclosure. As shown, an efficiency penalty of approximately -8 to -6 points is incurred. Line 168 plots the net efficiency points of a natural gas combined cycle system including a low temperature carbon capture system according to the present disclosure and an amine-based carbon capture system. Thus, as shown in Fig. 5, the low temperature carbon capture system according to the present disclosure allows for the possibility of gaining 1-2 net efficiency points (a reduced penalty) for natural gas combined cycle systems in comparison to known carbon capture systems (i.e., lines 162 and 164).

In some embodiments, the above described systems and methods are electronically or computer controlled. The embodiments described herein are not limited to any particular system controller or processor for performing the processing and tasks described herein. The term controller or processor, as used herein, is intended to denote any machine capable of performing the calculations, or computations, necessary to perform the tasks described herein. The terms controller and processor also are intended to denote any machine that is capable of accepting a structured input and of processing the input in accordance with prescribed rules to produce an output. It should also be noted that the phrase "configured to" as used herein means that the controller/processor is equipped with a combination of hardware and software for performing the tasks of embodiments of the invention, as will be understood by those skilled in the art. The term controller/processor, as used herein, refers to central processing units, microprocessors, microcontrollers, reduced instruction set circuits (RISC), application specific integrated circuits (ASIC), logic circuits, and any other circuit or processor capable of executing the functions described herein.

The embodiments described herein embrace one or more computer readable media, including non-transitory computer readable storage media, wherein each medium may be configured to include or includes thereon data or computer executable instructions for manipulating data. The computer executable instructions include data structures, objects, programs, routines, or other program modules that may be accessed by a processing system, such as one associated with a general-purpose computer capable of performing various different functions or one associated with a special-purpose computer capable of performing a limited number of functions. Aspects of the disclosure transform a general-purpose computer into a special-purpose computing device when configured to execute the instructions described herein. Computer executable instructions cause the processing system to perform a particular function or group of functions and are examples of program code means for implementing steps for methods disclosed herein. Furthermore, a particular sequence of the executable instructions provides an example of corresponding acts that may be used to implement such steps. Examples of computer readable media include random-access memory ("RAM"), read-only memory ("ROM"), programmable read-only memory ("PROM"), erasable programmable read-only memory ("EPROM"), electrically erasable programmable read-only memory ("EEPROM"), compact disk read-only memory ("CD-ROM"), or any other device or component that is capable of providing data or executable instructions that may be accessed by a processing system.

A computer or computing device such as described herein has one or more processors or processing units, system memory, and some form of computer readable media. By way of example and not limitation, computer readable media comprise computer storage media and communication media. Computer storage media include volatile and nonvolatile, removable and non-removable media implemented in any method or technology for storage of information such as computer readable instructions, data structures, program modules or other data. Communication media typically embody computer readable instructions, data structures, program modules, or other data in a modulated data signal such as a carrier wave or other transport mechanism and include any information delivery media. Combinations of any of the above are also included within the scope of computer readable media.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A carbon capturing system, comprising:
   a supply configured to supply a compressed flue gas;
   a water pre-cooler configured to cool the compressed flue gas;
   a multi-stream heat exchanger located downstream of said water-pre-cooler configured to further pre-cool the compressed flue gas, said multi-stream heat exchanger is configured to separate the compressed flue gas into a first compressed stream and a second compressed stream;
   a gas expansion device located downstream of said multi-stream heat exchanger, said gas expansion device configured to expand the compressed flue gas into a first sub-stream of carbon dioxide depleted gas and a second sub-stream of carbon dioxide;
   a first recirculation channel configured to recirculate at least a portion of the first sub-stream into said multi-stream heat exchanger; and
   a second recirculation channel configured to recirculate at least a portion of the second sub-stream into said multi-stream heat exchanger, wherein said multi-stream heat exchanger is configured to pre-cool the compressed flue gas using said first sub-stream and said second sub-stream.
2. The system according to Clause 1, wherein said first sub-stream pre-cools said first compressed stream and said second sub-stream pre-cools said second compressed stream.
3. The system according to Clause 1 or 2, wherein said multi-stream heat exchanger is configured to separate the flue gas such that the first compressed stream comprises approximately 60% to 90% of the compressed flue gas and said second compressed stream comprises approximately 10% to 40% of the compressed flue gas.
4. The system according to any of Clauses 1 to 3, further comprising:
   a manifold configured to re-combine said first compressed substream and said second compressed substream; and
   a secondary heat exchanger located downstream of said multi-stream heat exchanger, said secondary heat exchanger configured to further cool the re-combined compressed flue gas before entering said gas expansion device, wherein said secondary heat exchanger comprises an ice-phobic coating.

## Claims

1. A device for capturing carbon dioxide comprising:
a supply source (100) configured to supply a compressed flue gas;
a multi-stream heat exchanger (102) for pre-cooling the compressed flue gas, wherein said multi-stream heat exchanger is configured to separate the compressed flue gas into a first compressed stream (130) and a second compressed stream (132);
a gas expansion device (114) located downstream of said multi-stream heat exchanger, said gas expansion device configured to expand the compressed flue gas into a first sub-stream (134, 136) of carbon dioxide depleted gas and a second sub-stream (134, 136) of carbon dioxide;
a first recirculation (138, 152) channel configured to recirculate at least a portion of the first sub-stream into said multi-stream heat exchanger; and
a second recirculation channel (138, 152) configured to recirculate at least a portion of the second sub-stream into said multi-stream heat exchanger, wherein said multi-stream heat exchanger is configured to pre-cool the compressed flue gas using the first sub-stream and the second sub-stream.

2. The device according to Claim 1, wherein said first sub-stream (136) pre-cools said first compressed stream (130) and said second sub-stream (134) pre-cools said second compressed stream (132).

3. The device according to Claim 1 or 2, wherein said multi-stream heat exchanger (102) is configured to separate the flue gas such that the first compressed stream (130) is a larger volume stream than the second compressed stream (132).

4. The device according to any of Claims 1 to 3, further comprising a manifold (110) configured to re-combine said first compressed stream (130) and said second compressed stream (132).

5. The device according to Claim 4, further comprising a secondary heat exchanger (112) located downstream of said multi-stream heat exchanger (102), said secondary heat exchanger configured to further cool the re-combined compressed flue gas before entering said gas expansion device (114).

6. The device according to Claim 5, wherein said secondary heat exchanger (112) comprises a vibrator (150) configured to vibrate said secondary heat exchanger to facilitate removal of solid carbon dioxide (146) from a surface of said secondary heat exchanger.

7. The device according to Claim 5 or 6, wherein said secondary heat exchanger (112) comprises an ice-phobic coating (144).

8. The device according to any of Claims 5 to 7, wherein said secondary heat exchanger (112) is configured to collect solid carbon dioxide (146) formed in said secondary heat exchanger.

9. The device according to any of Claims 1 to 8, wherein said multi-stream heat exchanger (102) is configured to output said first sub-stream (130) and said second sub-stream (132) to separate output channels.

10. A method of capturing carbon dioxide, said method comprising:
providing a compressed gas (100) containing carbon dioxide;
pre-cooling the compressed gas (100) in a multi-stream heat exchanger (102), said multi-stream heat exchanger (102) separating the compressed gas (100) into a first compressed stream (130) and a second compressed stream (132), and
expanding the compressed gas in a gas expansion device (114) to provide a first sub-stream of carbon dioxide depleted gas (134) and a second sub-stream of carbon dioxide (136); and
supplying the first sub-stream and the second sub-stream (134,136) to the multi-stream heat exchanger (102) to facilitate said pre-cooling of the compressed gas.

11. The method according to Claim 10, wherein said first sub-stream (136) pre-cools said first compressed stream (130) and said second sub-stream (134) pre-cools said second compressed stream.

12. The method according to Claim 10 or 11, wherein the multi-stream heat exchanger (102) separates the compressed gas such that the first compressed stream (130) has a larger volume than the second compressed stream (132).

13. The method according to Claim 11 or 12, further comprising re-combining the first compressed sub-stream (136) and the second compressed sub-stream (134) after said pre-cooling and before said expanding.

14. The method according to Claim 13, further comprising further cooling the re-combined compressed gas before said expanding using a secondary heat exchanger (112) located downstream of the multi-stream heat exchanger (102).

15. The method according to Claim 14, wherein the secondary heat exchanger (112) comprises an ice-phobic coating (144).
